# EUROPÄISCHE PATENTSCHRIFT

(11) **EP 1 912 856 B1**
(45) Veröffentlichungstag und Bekanntmachung des Hinweises auf die Patenterteilung: **13.10.2010**
(21) Anmeldenummer: 06776664.2
(22) Anmeldetag: 08.08.2006
(51) Int. Cl.: B62L 3/02, B60T 7/10

(54) **HEBELANORDNUNG UND BEDIENUNGSEINHEIT FÜR LENKERGEFÜHRTE FAHRZEUGE**
LEVER ARRANGEMENT AND OPERATING UNIT FOR HANDLEBAR-MOUNTED VEHICLES
ENSEMBLE LEVIER ET UNITE DE COMMANDE POUR DES VEHICULES GUIDES PAR UN GUIDON

(30) Priorität: 10.08.2005 DE 102005039109
(43) Veröffentlichungstag der Anmeldung: 23.04.2008
(73) Patentinhaber: Gustav Magenwirth GmbH & Co. KG, 72574 Bad Urach (DE)
(72) Erfinder: SCHMAUDER, Werner, 72584 Hülben (DE)
(74) Vertreter: Beck, Jürgen
(86) Internationale Anmeldenummer: PCT/EP2006/007822
(87) Internationale Veröffentlichungsnummer: WO 2007/017239

(56) Entgegenhaltungen:
- DE-A1- 19 744 138
- DE-U1- 9 407 682
- JP-A- 59 073 353
- JP-A- 2004 276 649
- JP-A- 2005 001 511
- US-A- 3 546 960
- US-A- 3 800 618
- US-A- 4 862 999
- US-A1- 2004 168 895

## Beschreibung

Die Erfindung betrifft eine Bedienungseinheit für ein Fahrzeug ,mit einem Lenker zum Führen des Fahrzeugs, mit einem an dem Lenker angeordneten Handgriff, umfassend eine Handauflagefläche sowie einen radial zu einer Mittelachse über die Handauflagefläche überstehenden inneren Ringkörper, und mit einer dem Handgriff zugeordneten Hebelanordnung, umfassend ein an dem Lenker im Anschluss an den Handgriff mit einem Halteabschnitt montierbares Betätigungshebelgehäuse, an welchem ein Betätigungshebel um eine Achse schwenkbar gelagert ist, und einen Stellhebel, welcher durch Schwenken um eine Schwenkachse von einer stabilen Inaktivstellung, in welcher der Stellhebel auf einer Seite seiner Schwenkachse steht, die dem Betätigungshebel abgewandt ist, in eine stabile Aktivstellung, in welcher der Stellhebel auf einer Seite seiner Schwenkachse steht, die dem Betätigungshebel zugewandt ist, und umgekehrt in einer Schwenkebene bewegbar ist, die in einem Winkel von weniger als 30° zu der Bewegungsebene des Betätigungshebels verläuft.

Eine derartige Bedienungseinheit ist beispielsweise aus der JP 2005-5001511 oder der EP 1 081 039 A2 bekannt, wobei der Stellhebel in seiner Aktivstellung ein Zugreifen auf den Handgriff sowie eine damit zusammenhängende Betätigung des Betätigungshebels behindert.

Bei dieser Lösung ist ein Herausbewegen des Stellhebels aus der Aktivstellung durch eine aufwendige manuelle Betätigung erforderlich.

Der Erfindung liegt daher die Aufgabe zugrunde, eine Bedienungseinheit der gattungsgemäßen Art derart zu verbessern, dass der Stellhebel durch eine manuelle und einfach auszuführende Betätigung aus der Aktivstellung herausbewegbar ist.

Diese Aufgabe wird bei einer Bedienungseinheit der eingangs beschriebenen Art erfindungsgemäß dadurch gelöst, dass der Stellhebel in der Aktivstellung im Wesentlichen auf einer dem Handgriff und dem Betätigungsabschnitt des Betätigungshebels abgewandten Seite einer Ebene liegt, die senkrecht zu einer Mittelachse des Handgriffs verläuft und den inneren Ringkörper des Handgriffs schneidet und somit außerhalb eines sich zwischen einer Handauflagefläche des Handgriffs und einer Handangriffsfläche des Betätigungshebels erstreckenden manuellen Aktionsraums zum Betätigen des Betätigungshebels liegt.

Dadurch dass der Stellhebel in der Aktivstellung außerhalb eines sich zwischen einer Handauflagefläche des Handgriffs und einer Handangriffsfläche des Betätigungshebels erstreckenden manuellen Aktionsraums zum Betätigen des Betätigungshebels liegt, ist eine ergonomisch günstige Konzeption geschaffen.

Damit besteht die Möglichkeit, zum Herausbewegen des Stellhebels aus der Aktivstellung die Hand sowohl an dem Handgriff als auch an dem Betätigungshebel anzulegen und an diesen abzustützen, um die Fingerbetätigungsfläche des Stellhebels zu beaufschlagen.

Eine zweckmäßige Lösung sieht vor, dass der Stellhebel in einem an dem Betätigungshebelgehäuse angeordneten Stellhebelgehäuse schwenkbar gelagert ist und dass der Stellhebel in der Aktivstellung eine im Abstand von dem Handgriff verlaufende und diesem zugewandte Fingerbetätigungsfläche aufweist, bei deren Beaufschlagung der Stellhebel eine vom Handgriff weg und aus der Aktivstellung herausführende Schwenkbewegung ausführt.

Der Vorteil dieser Lösung ist somit darin zu sehen, dass der Stellhebel in einfacher Weise, beispielsweise durch eine Betätigung mittels des Daumens aus der Aktivstellung herausbewegt und somit gelöst werden kann, was daraus resultiert, dass der Stellhebel in seiner Aktivstellung mit seiner Fingerbetätigungsfläche im Abstand von dem Handgriff, jedoch diesem zugewandt, verläuft und zum Bewegen aus der Aktivstellung von dem Handgriff wegbewegbar ist.

Hierbei ist es besonders günstig, wenn der Stellhebel in der Aktivstellung mit seiner Fingerbetätigungsfläche so angeordnet ist, dass diese bei an der Handangriffsfläche anliegenden Fingern einer Hand mit deren Daumen beaufschlagbar ist, das heißt bei einer derart positionierten Hand im Aktionsbereich des Daumens derselben liegt, wobei eine durchschnittliche Handgröße und Daumenlänge sowie Beweglichkeit zugrunde zu legen ist.

Ergonomisch besonders günstig ist der Stellhebel in der Aktivstellung so angeordnet, dass dieser mit seiner Fingerbetätigungsfläche, ausgehend von der Handangriffsfläche in Richtung des Betätigungshebelgehäuses betrachtet, seitlich neben der Handangriffsfläche des Betätigungshebels liegt, dabei jedoch insbesondere im Abstand von einer Bewegungsebene des Betätigungshebels steht.

Als besonders günstig hat es sich erwiesen, wenn der Stellhebel in seiner Aktivstellung mit seiner Fingerbetätigungsfläche ungefähr zwischen der Handangriffsfläche des Betätigungshebels und dem Betätigungshebelgehäuse liegt.

Um den Stellhebel ergonomisch günstig aus der Aktivstellung herausbewegen zu können, sieht eine vorteilhafte Lösung vor, dass die Fingerbetätigungsfläche des Stellhebels auf der Seite einer Bewegungsebene des Betätigungshebels liegt, auf der eine auf den Betätigungshebel einwirkende Hand liegt.

Eine zweckmäßige Lösung sieht vor, dass der Stellhebel sowohl in der Aktivstellung als auch in der Inaktivstellung auf der Seite der Bewegungsebene liegt, auf der die auf den Betätigungshebel einwirkende Hand liegt.

Der Stellhebel ist in einer Schwenkebene bewegbar, die in einem Winkel von weniger als 30° zu einer Bewegungsebene des Betätigungshebels verläuft.

Noch vorteilhafter ist es, wenn der Winkel weniger als 20°, noch besser weniger als 15° beträgt.

Hinsichtlich der Anordnung des Stellhebelgehäuses relativ zum Betätigungshebelgehäuse wurden bislang keine näheren Angaben gemacht. So wäre es prinzipiell denkbar, dass das Stellhebelgehäuse unmittelbar auf das Betätigungsgehäuse aufschraubbar ist.

Eine konstruktiv zweckmäßige Lösung sieht vor, dass das Betätigungshebelgehäuse einen Deckel aufweist, an welchem das Stellhebelgehäuse angeordnet ist.

Noch vorteilhafter ist es, wenn das Stellhebelgehäuse an den Deckel des Betätigungshebelgehäuses einstückig angeformt ist.

Insbesondere dann, wenn eine hydraulische Betätigungsübertragungseinheit vorgesehen ist, auf welche der Betätigungshebel wirkt, sieht ein zweckmäßiges Ausführungsbeispiel vor, dass der Deckel des Betätigungshebelgehäuses einen in diesem vorgesehenen hydraulischen Ausgleichsbehälter abdeckt.

Hinsichtlich der Ausbildung der Wirkung des Stellhebels selbst wurden bislang keine näheren Angaben gemacht. So sieht eine vorteilhafte Lösung vor, dass der Stellhebel auf eine in einer Rückzugsrichtung elastisch vorgespannte Übertragungseinrichtung wirkt.

Vorzugsweise ist dabei die Übertragungseinrichtung so ausgebildet, dass sie auf den Stellhebel derart einwirkt, dass dieser nach dem Herausbewegen aus der Aktivstellung selbsttätig in die Inaktivstellung übergeht.

Um den Stellhebel in der Aktivstellung festlegen zu können, sind unterschiedliche Lösungen denkbar. Beispielsweise wäre eine form- oder kraftschlüssige Festlegung des Stellhebels denkbar. Eine konstruktiv besonders einfache Lösung sieht vor, dass der Stellhebel in der Aktivstellung in einer Übertotpunktstellung steht und somit trotz Beaufschlagung durch die Übertragungseinrichtung in der Aktivstellung stabil stehen bleibt.

Um die Übertotpunktstellung in einfacher Weise erreichen zu können, ist vorzugsweise vorgesehen, dass mit dem Stellhebel eine Anlenkung eines Zugelements der Übertragungseinrichtung auf einem Bogensegment um die Schwenkachse bewegbar ist und somit von der Übertotpunktstellung, die der Aktivstellung entspricht, in die Inaktivstellung, welcher keiner Übertotpunktstellung entspricht, bewegbar ist.

Um bei einer derartigen konstruktiven Lösung einen geringen Raumbedarf für den Stellhebel und das Zugelement zu erhalten, ist vorzugsweise vorgesehen, dass der Stellhebel zwei, beiderseits eines Zwischenraums angeordnete Hebelwangen aufweist und dass in dem Zwischenraum das von der Anlenkung wegführende Zugelement verläuft.

Hinsichtlich der Lagerung des Stellhebels wurden bislang keine näheren Angaben gemacht. Dabei sieht eine günstige Lösung vor, dass die beiden Hebelwangen zwischen Seitenwänden eines Gehäuseabschnitts des Stellhebelgehäuses angeordnet sind, so dass die beiden Hebelwangen im Wesentlichen von dem Gehäuseabschnitt des Stellhebelgehäuses umschlossen sind.

Hinsichtlich der schwenkbaren Lagerung des Stellhebels sieht dabei ein vorteilhaftes Ausführungsbeispiel vor, dass jede Hebelwange auf einer dem Zwischenraum abgewandten Seite an der jeweiligen Seitenwand des Stellhebelgehäuses schwenkbar gelagert ist.

Da der Stellhebel beim Lösen der Aktivstellung aufgrund der Übertragungseinrichtung in Richtung der Inaktivstellung beschleunigt wird, ist vorzugsweise vorgesehen, dass der Inaktivstellung ein Anschlagdämpfungselement für den Stellhebel zugeordnet ist, so dass dieses bei Erreichen der inaktiven Stellung ein Anschlagen des Stellhebels dämpft.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Draufsicht auf ein Ausführungsbeispiel einer erfindungs- gemäßen Hebelanordnung im Zusammenhang mit einer erfindungsgemäßen Bedienungseinheit bei in Aktivstellung stehendem Stellhebel;
- Fig. 2: einen Schnitt längs Linie 2-2 in Fig. 1;
- Fig. 3: einen Schnitt längs Linie 3-3 in Fig. 1;
- Fig. 4: einen Schnitt längs Linie 4-4 in Fig. 2;
- Fig. 5: einen Schnitt ähnlich Fig. 4 bei in Inaktivstellung stehendem Stellhebel und
- Fig. 6: einen Schnitt längs Linie 6-6 in Fig. 1, allerdings bei in Inaktiv- stellung stehendem Stellhebel.

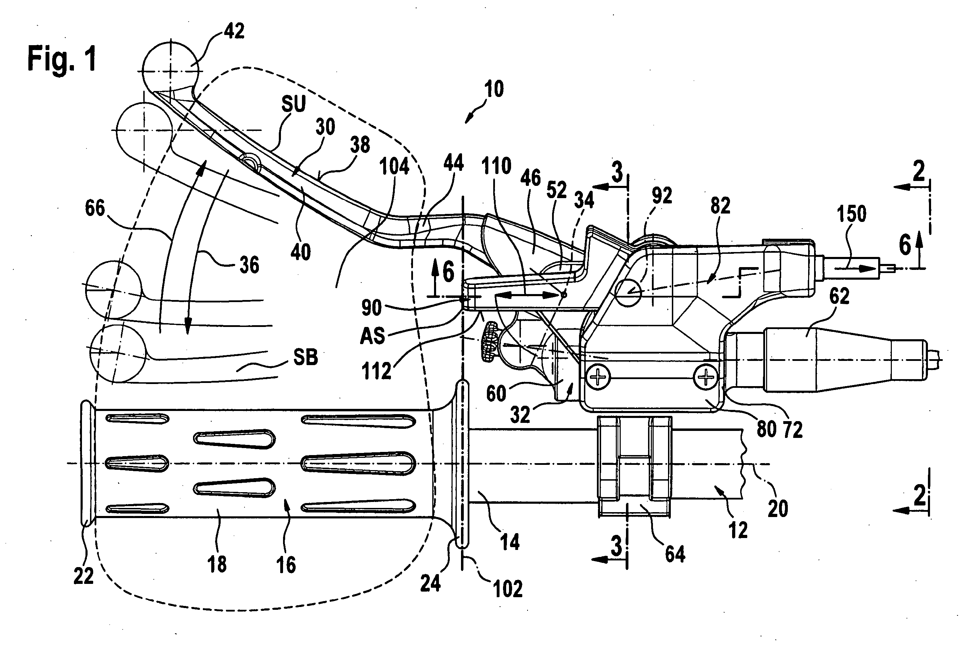

Ein in Fig. 1 dargestelltes Ausführungsbeispiel einer erfindungsgemäßen Bedieneinheit 10 für ein lenkergeführtes Fahrzeug, insbesondere für ein lenkergeführtes Kraftfahrzeug, umfasst einen Lenker 12, welcher an einem Endbereich 14 einen Handgriff 16 trägt.

Der Handgriff 16 umfasst seinerseits eine Handauflagefläche 18, die zwischen einem äußeren radial zu einer Mittelachse 20 über die Handauflagefläche 18 überstehenden Ringkörper 22 und einem inneren, ebenfalls radial zur Mittelachse 20 über die Handauflagefläche 18 überstehenden Ringkörper 24 liegt.

Dem Handgriff 16 ist ferner ein Betätigungshebel 30 zugeordnet, welcher an einem Betätigungshebelgehäuse 32 um eine Achse 34 schwenkbar gelagert ist, und dabei von einer in Fig. 1 durchgezogen gezeichneten unbetätigten Stellung SU in einer Betätigungsrichtung 36 schwenkbar ist und somit in eine betätigte Stellung SB verschwenkbar ist, in welcher der Betätigungshebel 30 näher an dem Handgriff 16 liegt als in der unbetätigten Stellung.

Hierzu ist der Betätigungshebel 30 vorzugsweise mit einer Handangriffsfläche 38 versehen, welcher sich weitgehend auf einer dem Handgriff 16 abgewandten Seite des Betätigungshebels 30 an einem Betätigungsabschnitt 40 des Betätigungshebels 30 erstreckt, der zwischen einem äußeren, vorzugsweise kugelähnlich ausgebildeten Begrenzungskörper 42 und einem abgekröpften Abschnitt 44 des Betätigungshebels 30 liegt, wobei der abgekröpfte Abschnitt 44 in einen Lagerabschnitt 46 des Betätigungshebels übergeht, der um die Achse 34 schwenkbar in dem Betätigungshebelgehäuse 32 gelagert ist.

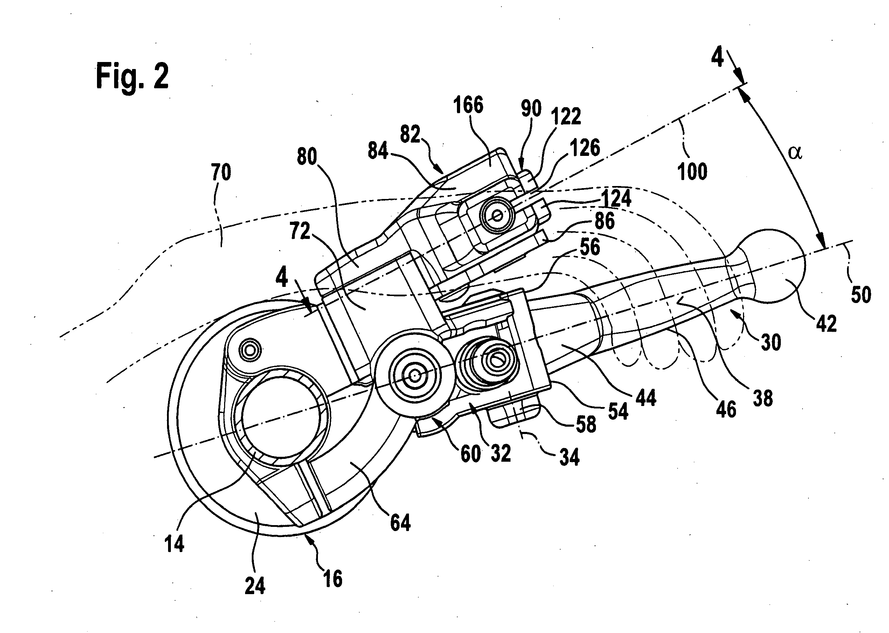

Wie in Fig. 2 dargestellt, ist dabei der Betätigungshebel 30 beim Verschwenken um die Achse 34 in einer Bewegungsebene 50 bewegbar, welche vorzugsweise durch die Mittelachse 20 des Handgriffs 16 hindurchverläuft.

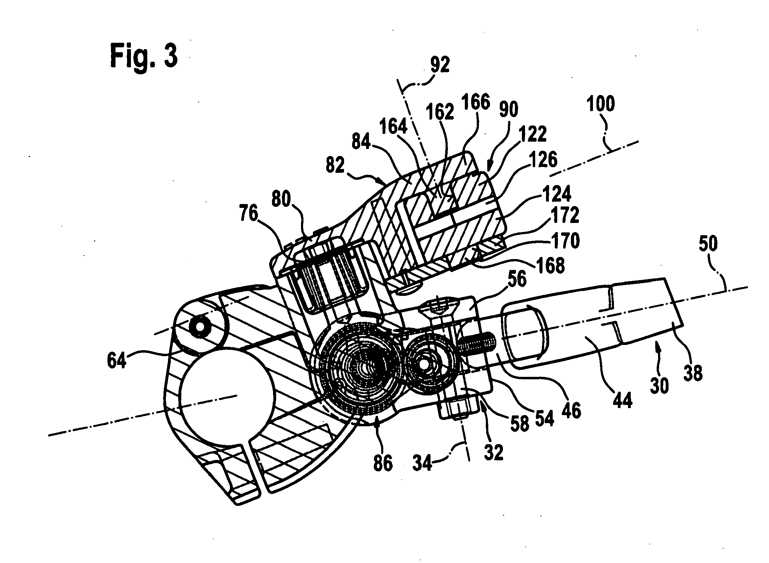

Das Betätigungshebelgehäuse 32 umfasst seinerseits, wie in Fig. 2 und 3 dargestellt, einen Gehäuseabschnitt 52 mit zwei Lagerwangen 54 und 56, zwischen denen der Betätigungshebel 30 mit seinem Lagerabschnitt 46 angeordnet ist, wobei der Lagerabschnitt 46 und die beiden Lagerwangen 54 und 56 von einem Lagerzapfen 58 durchsetzt sind, welcher die Bewegbarkeit um die Achse 34 erlaubt.

Darüber hinaus umfasst das Betätigungshebelgehäuse 32 einen Gehäuseabschnitt 60, in welchem eine zeichnerisch nicht näher dargestellte Betätigungsübertragungseinheit, beispielsweise in Form eines bekannten hydraulischen Betätigungszylinders, angeordnet ist, mit welcher über einen Hydraulikanschluss 62, wie in Fig. 1 dargestellt, eine hydraulische Betätigung einer Antriebsfunktion des lenkergeführten Kraftfahrzeugs möglich ist.

Diese Antriebsfunktion kann beispielsweise eine Bremse oder eine Kupplung oder eine andere Funktion zur Steuerung von Fahrfunktionen des lenkergeführten Kraftfahrzeugs sein.

Die Fixierung des Betätigungshebelgehäuses 32 an dem Endbereich 14 des Lenkers 12 erfolgt vorzugsweise über einen Halteabschnitt 64 des Betätigungshebelgehäuses 32, welcher beispielsweise an dem Endbereich 14 des Lenkers 12 kraftschlüssig, beispielsweise durch Festklemmen fixierbar ist.

Vorzugsweise wirkt der Betätigungshebel 30 mit der Betätigungsübertragungseinheit derart zusammen, dass in der unbetätigten Stellung SU keine Betätigung einer Fahrfunktion des Kraftfahrzeugs erfolgt, während in der betätigten Stellung SB des Betätigungshebels 30 eine Fahrfunktion des Kraftfahrzeugs eine Betätigung erfährt, beispielsweise dergestalt, dass im Fall einer zu betätigenden Bremse die Bremse wirksam ist oder einer zu betätigenden Kupplung die Kupplung ausgekuppelt ist.

In allen Fällen ist jedoch der Betätigungshebel 30 stets entgegengesetzt zur Betätigungsrichtung 36 in einer Betätigungslöserichtung 66 beaufschlagt und hat somit stets die Tendenz von seiner betätigten Stellung SB in seine unbetätigte Stellung SU überzugehen, sofern keine Kraftbeaufschlagung der Handangriffsfläche 38 durch eine Hand 70 in der Betätigungsrichtung 36 erfolgt, die im Fahrbetrieb auf einer einer Fahrbahn abgewandten Seite der Bewegungsebene 50 sowohl auf die Handauflagefläche 18 als auch die Handangriffsfläche 38 auflegbar ist.

Insbesondere im Fall einer hydraulischen Betätigungsübertragungseinheit umfasst das Betätigungshebelgehäuse 32 noch einen Gehäuseabschnitt 72, in welchem ein Ausgleichsbehälter 74, dargestellt in Fig. 1, Fig. 2 und Fig. 5, vorgesehen ist, wobei der Gehäuseabschnitt 72 eine Öffnung 76, dargestellt in Fig. 3, aufweist, die durch einen Gehäusedeckel 80 verschließbar ist, wobei der Gehäusedeckel 80 vorzugsweise auf den Gehäuseabschnitt 72 aufschraubbar ist.

An den Gehäusedeckel 80 ist ein Stellhebelgehäuse 82 einstückig angeformt, welches einen Gehäusegrundkörper 84 und einen Gehäusedeckel 86, dargestellt in Fig. 2, umfasst.

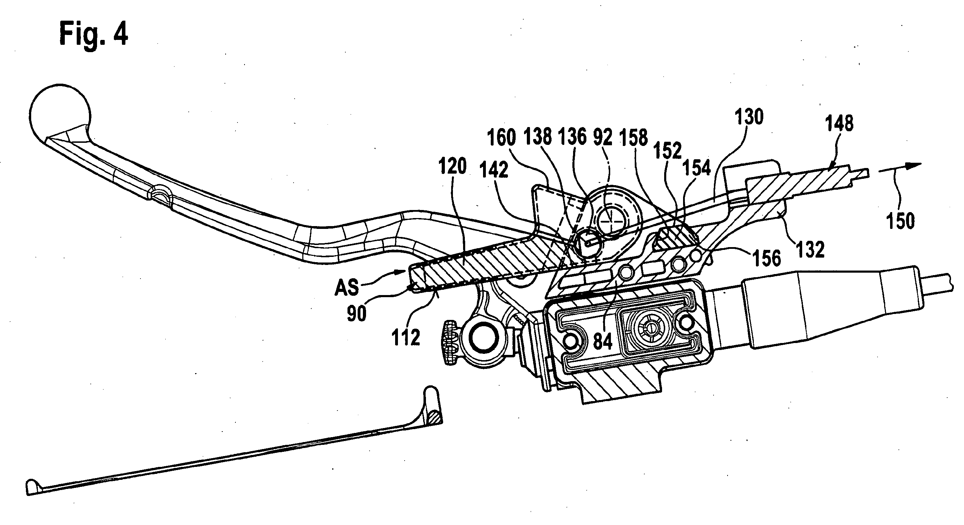

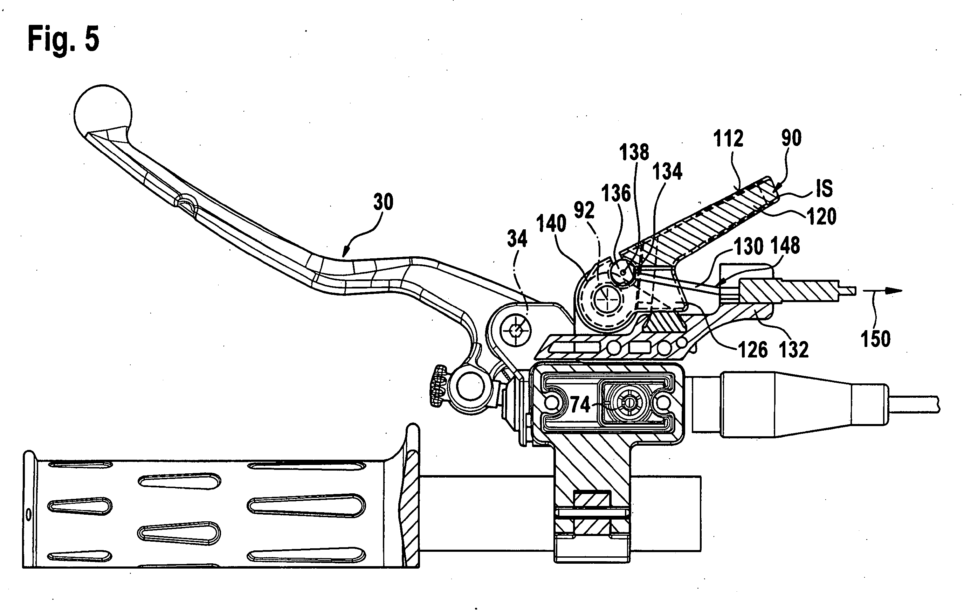

In dem Stellhebelgehäuse 82 ist ein als Ganzes mit 90 bezeichneter Stellhebel um eine Schwenkachse 92 schwenkbar gelagert, und zwar so, dass der Stellhebel 90 von einer in Fig. 1 und 4 dargestellten Aktivstellung AS, in welcher der Schwenkhebel 90 auf einer dem Betätigungshebel 30 zugewandten Seite der Schwenkachse 92 steht, in eine in Fig. 5 dargestellte Inaktivstellung IS bewegbar ist, in welcher der Stellhebel 90 auf einer dem Betätigungshebel 30 abgewandten Seite der Schwenkachse 92 steht.

Wie in Fig. 2 dargestellt, ist dabei der Schwenkhebel 90 zwischen der Aktivstellung AS und der Inaktivstellung IS in einer Schwenkebene 100 bewegbar, welche gegenüber der Bewegungsebene 50 um einen Winkel α geneigt verläuft, wobei der Winkel α kleiner als 30°, noch besser kleiner als 20° und vorzugsweise kleiner als 15° ist.

Ferner liegt die Schwenkebene 100 auf derselben Seite der Bewegungsebene 50, auf der ebenfalls die Hand 70 einer Bedienungsperson auf den Handgriff 16 und den Betätigungshebel 30 im Wesentlichen auflegbar ist, um den Betätigungshebel 30 relativ zum Handgriff 16 von der unbetätigten Stellung SU in die betätigte Stellung SB, beide dargestellt in Fig. 1, zu bewegen.

Erfindungsgemäß ist der Stellhebel 90 in dem Stellhebelgehäuse 82 derart gelagert, dass dieser in seiner in Fig. 1 und 4 dargestellten Aktivstellung AS im Wesentlichen auf einer dem Handgriff 16 und dem Betätigungsabschnitt 40 des Betätigungshebels 30 abgewandten Seite einer Ebene 102 liegt, die senkrecht zur Mittelachse 20 verläuft und den inneren Ringkörper 24 des Handgriffs 16 schneidet.

Damit liegt der Stellhebel 90 auch außerhalb eines manuellen Aktionsraums 104 in welchem sich die Hand 70 beim Beaufschlagen der Handangriffsfläche 38 des Betätigungshebels 30 mittels der Finger mit Ausnahme des Daumens, im Wesentlichen mittels Zeigefinger, Mittelfinger und Ringfinger erstreckt (siehe Fig. 1).

Der Stellhebel 90 erstreckt sich jedoch in seiner in Fig. 1 und 4 dargestellten Aktivstellung AS mit seiner Längsrichtung 110 ungefähr parallel zur Mittelachse 20 des Handgriffs 16 und weist eine Fingerbetätigungsfläche 112 auf, welche in der Aktivstellung AS im Wesentlichen dem Handgriff 16 zugewandt ist, jedoch im Abstand von der Handauflagefläche 18 des Handgriffs 16 angeordnet ist.

Vorzugsweise erstreckt sich der Stellhebel 90 in seiner in Fig. 1 und 4 dargestellten Aktivstellung AS in einem Bereich zwischen dem Endbereich 14 des Lenkers 12 und dem in seiner unbetätigten Stellung SU stehenden Betätigungshebel vorzugsweise nahe dem Lagerabschnitt 46 des Betätigungshebels 30, so dass die dem Handgriff 16 zugewandte Fingerbetätigungsfläche 112 bei auf der Handangriffsfläche 38 des Betätigungshebels 30 aufliegenden Fingern der Hand, insbesondere bei auf der Handbetätigungsfläche 38 aufliegendem Zeigefinger, Mittelfinger und Ringfinger mittels des Daumens beaufschlagbar ist, um eine Schwenkbewegung des Stellhebels 90 einzuleiten, in welcher sich dieser um die Schwenkachse 92 von der Aktivstellung AS in die Inaktivstellung IS verschwenkt und dabei sich die Fingerbetätigungsfläche 112 zunehmend von dem Endbereich 14 des Lenkers 12 entfernt.

Wie in den Fig. 3 bis 6 dargestellt, umfasst der Stellhebel 90 einen die Fingerbetätigungsfläche 112 tragenden äußeren Hebelarm 120, der in zwei im Abstand voneinander angeordnete Hebelwangen 122, 124 übergeht, zwischen denen ein Zwischenraum 126 verbleibt, welcher sich auch über die Schwenkachse 92 hinwegerstreckt.

In dem Zwischenraum 126 verläuft ein Zugelement 130, welches sich ausgehend von einer Führungsaufnahme 132 an dem Stellhebelgehäuse 82 in den Zwischenraum 126 hineinerstreckt bis zu einem gelenkig in einer Bohrung 134 des Stellhebels 90 gelagerten Verankerungskörper 136, welcher mit seiner Schwenkachse einen Anlenkpunkt 138 für das Zugelement 130 bildet, der beim Verschwenken des Stellhebels 90 von der Inaktivstellung IS in die Aktivstellung AS und umgekehrt auf einem Bogensegment 140 um die Schwenkachse 92 des Stellhebels 90 herum bewegbar ist, wobei der Anlenkpunkt 138 in der Aktivstellung AS des Stellhebels 90, beispielsweise dargestellt in Fig. 4, bezogen auf den Verlauf des Zugelements 130 zwischen dem Anlenkpunkt 138 und der Führungsaufnahme 132 in einer sogenannten Übertotpunktstellung steht, in welcher eine auf den Anlenkpunkt 138 ausgeübte Zugwirkung des Zugelements 130 den Stellhebel 90 in der Aktivstellung an einem von dem Gehäusegrundkörper 84 gebildeten Gehäuseanschlag 142 anliegend hält, und verhindert, dass der Stellhebel 90 sich selbsttätig von der Aktivstellung, dargestellt in Fig. 1 und 4, in die Inaktivstellung, dargestellt in Fig. 5 bewegt.

Das Zugelement 130 ist Teil einer Übertragungseinrichtung 148, welche die Stellung des Stellhebels 90 zur Einstellung einer Funktion des lenkergeführten Fahrzeugs, insbesondere einer Fahrfunktion des lenkergeführten Fahrzeugs überträgt.

Beispielsweise ist durch den Stellhebel 90 eine sogenannte Parkbremse oder Feststellbremse des Fahrzeugs betätigbar, wobei die Parkbremse in der Aktivstellung des Stellhebels 90 wirksam ist und in der Inaktivstellung desselben gelöst ist.

Die Parkbremse wirkt durch die Übertragungseinrichtung 148 stets mit einer Rückzugkraft 150 auf den Stellhebel 90, was zur Folge hat, dass beim Herausbewegen desselben aus der Aktivstellung AS durch Beaufschlagen der Fingerbetätigungsfläche 112 mit dem Daumen im Wesentlichen lediglich eine Totpunktstellung des sich zwischen dem Anlenkpunkt 138 und der Führungsaufnahme 132 erstreckenden Zugelements 130 erreicht werden muss und nach Überlaufen der Totpunktstellung die Zugkraft 150 des Zugelements 130 dazu führt, dass sich der Stellhebel 90 selbsttätig und ohne manuelle Einwirkung in die Inaktivstellung IS bewegt.

Da der Stellhebel 90 eine sehr starke Beschleunigung bei der Bewegung in die Inaktivstellung IS erfährt, ist als die Inaktivstellung IS festlegender Gehäuseanschlag 152 ein elastischer Körper 154 vorgesehen, der einen schwalbenschwanzähnlich ausgebildeten Fußbereich 156 aufweist, welcher seinerseits in einer schwalbenschwanzähnlich ausgebildeten Aufnahme 158 in dem Gehäusegrundkörper 84 gehalten ist, wobei der Gehäusegrundkörper 84 und somit auch die Aufnahme 158 mit dem eingesetzten elastischen Körper 154 durch den Gehäusedeckel 86 verschließbar sind. An den Gehäuseanschlag 152 ist der Stellhebel 90 mit einer Anschlagnase 160 in der Inaktivstellung IS anlegbar.

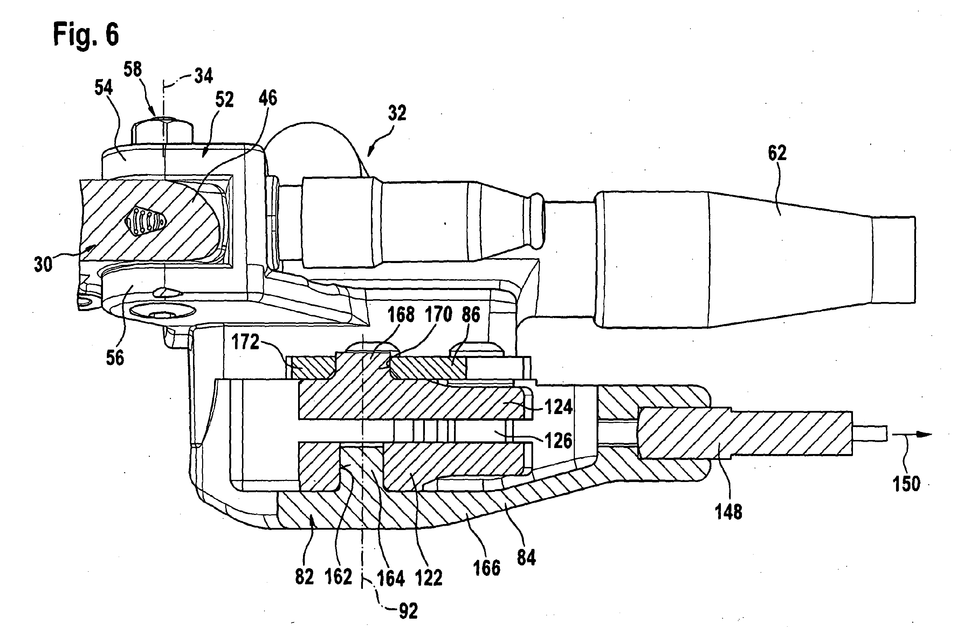

Um das Zugelement 130 in dem Zwischenraum 126 zum Erreichen der Übertotpunktstellung über die Schwenkachse 92 hinwegbewegen zu können, ist, wie in Fig. 3 und 6 dargestellt, die Hebelwange 122 mit einer Bohrung 162 versehen, in welche ein an den Gehäusegrundkörper 84 angeformter Lagerzapfen 164 eingreift, der koaxial zur Schwenkachse 92 angeordnet ist, so dass die Hebelwange 122 koaxial zur Schwenkachse 92 an einer Seitenwand 166 des Gehäusegrundkörpers 84 des Stellhebelgehäuses 82 gelagert ist.

Ferner ist die Hebelwange 124 ihrerseits mit einem Lagerzapfen 168 versehen, welcher in eine Bohrung 170 im Gehäusedeckel 86 eingreift und somit ebenfalls koaxial zur Schwenkachse 92 an dem eine Seitenwand 172 bildenden Gehäusedeckel 86 schwenkbar gelagert ist (siehe Fig. 6).

## Patentansprüche

1. Bedienungseinheit für ein Fahrzeug mit einem Lenker (12) zum Führen des Fahrzeugs, mit einem an dem Lenker (12) angeordneten Handgriff (16), umfassend eine Handauflagefläche (18) sowie einen radial zu einer Mittelachse (20) des Handgriffs (16) über die Handauflagefläche (18) überstehenden inneren Ringkörper (24), und mit einer dem Handgriff (16) zugeordneten Hebelanordnung, umfassend ein an dem Lenker (12) im Anschluss an den Handgriff (16) mit einem Halteabschnitt (64) montierbares Betätigungshebelgehäuse (32), an welchem ein Betätigungshebel (30) um eine Achse (34) schwenkbar gelagert ist, und einen Stellhebel (90), welcher durch Schwenken um eine Schwenkachse (92) von einer stabilen Inaktivstellung (IS), in welcher der Stellhebel (90) auf einer Seite seiner Schwenkachse (92) steht, die dem Betätigungshebel (30) abgewandt ist, in eine stabile Aktivstellung (AS), in welcher der Stellhebel (90) auf einer Seite seiner Schwenkachse (92) steht, die dem Betätigungshebel (30) zugewandt ist, und umgekehrt in einer Schwenkebene (100) bewegbar ist, die in einem Winkel (α) von weniger als 30° zu der Bewegungsebene (50) des Betätigungshebels (30) verläuft,
**dadurch gekennzeichnet, dass** der Stellhebel (90) in der Aktivstellung (AS) im Wesentlichen auf einer dem Handgriff (16) und dem Betätigungsabschnitt (40) des Betätigungshebels (30) abgewandten Seite einer Ebene (102) liegt, die senkrecht zu der Mittelachse (20) des Handgriffs (16) verläuft und den inneren Ringkörper (24) des Handgriffs (16) schneidet und somit außerhalb eines sich zwischen einer Handauflagefläche (18) des Handgriffs (16) und einer Handangriffsfläche (38) des Betätigungshebels (30) erstreckenden manuellen Aktionsraums (104) zum Betätigen des Betätigungshebels (30) liegt.

2. Bedienungseinheit nach Anspruch 1, **dadurch gekennzeichnet, dass** der Stellhebel (90) in einem an dem Betätigungshebelgehäuse (32) angeordneten Stellhebelgehäuse (82) schwenkbar gelagert ist und dass der Stellhebel (90) in der Aktivstellung (AS) eine im Abstand von dem Handgriff (16) verlaufende und diesem zugewandte Fingerbetätigungsfläche (112) aufweist, bei deren Beaufschlagung der Stellhebel (90) eine vom Handgriff (16) weg und aus der Aktivstellung herausführende Schwenkbewegung ausführt.

3. Bedienungseinheit nach Anspruch 1 oder 2, **dadurch gekennzeichnet, dass** der Stellhebel (90) in der Aktivstellung (AS) mit seiner Fingerbetätigungsfläche (112) in Richtung des Betätigungshebelgehäuses (32) versetzt neben der Handangriffsfläche (38) des Betätigungshebels (30) liegt.

4. Bedienungseinheit nach Anspruch 3, **dadurch gekennzeichnet, dass** der Stellhebel (90) in seiner Aktivstellung (AS) mit seiner Fingerbetätigungsfläche (112) zwischen der Handangriffsfläche (38) des Betätigungshebels (30) und dem Betätigungshebelgehäuse (32) liegt.

5. Bedienungseinheit nach einem der Ansprüche 1 bis 4, **dadurch gekennzeichnet, dass** die Fingerbetätigungsfläche (112) des Stellhebels (90) in der Aktivstellung (AS) auf der Seite einer Bewegungsebene (50) des Betätigungshebels (30) liegt, auf der eine an dem Betätigungshebel (30) angreifende Hand (70) auflegbar ist.

6. Bedienungseinheit nach einem der voranstehenden Ansprüche, **dadurch gekennzeichnet, dass** das Betätigungshebelgehäuse (32) einen Deckel (80) aufweist, an welchem das Stellhebelgehäuse (82) angeordnet ist.

7. Bedienungseinheit nach Anspruch 6, **dadurch gekennzeichnet, dass** das Stellhebelgehäuse (82) an den Deckel (80) einstückig angeformt ist.

8. Bedienungseinheit nach Anspruch 6 oder 7, **dadurch gekennzeichnet, dass** der Deckel (80) des Betätigungshebelgehäuses (82) einen in diesem vorgesehenen hydraulischen Ausgleichsbehälter (74) abdeckt.

9. Bedienungseinheit nach einem der voranstehenden Ansprüche, **dadurch gekennzeichnet, dass** der Stellhebel (90) auf eine in einer Rückzugsrichtung (150) elastisch vorgespannte Übertragungseinrichtung (148) wirkt.

10. Bedienungseinheit nach Anspruch 9, **dadurch gekennzeichnet, dass** die Übertragungseinrichtung (148) auf den Stellhebel (90) derart einwirkt, dass dieser nach dem Herausbewegen aus der Aktivstellung (AS) selbsttätig in die Inaktivstellung (IS) übergeht.

11. Bedienungseinheit nach Anspruch 10, **dadurch gekennzeichnet, dass** der Stellhebel (90) in der Aktivstellung (AS) in einer Übertotpunktstellung steht.

12. Bedienungseinheit nach Anspruch 11, **dadurch gekennzeichnet, dass** mit dem Stellhebel (90) eine Anlenkung (138) eines Zugelements (130) der Übertragungseinrichtung (148) auf einem Bogensegment (140) um die Schwenkachse (92) bewegbar ist.

13. Bedienungseinheit nach Anspruch 12, **dadurch gekennzeichnet, dass** der Stellhebel (90) zwei beiderseits eines Zwischenraums (126) angeordnete Hebelwangen (122, 124) aufweist und dass in dem Zwischenraum (126) das von der Anlenkung (138) wegführende Zugelement (130) verläuft.

14. Bedienungseinheit nach Anspruch 13, **dadurch gekennzeichnet, dass** die beiden Hebelwangen (122, 124) zwischen Seitenwänden des Stellhebelgehäuses (82) angeordnet sind.

15. Bedienungseinheit nach Anspruch 14, **dadurch gekennzeichnet, dass** jede Hebelwange (122, 124) auf ihrer dem Zwischenraum (126) abgewandten Seite an der jeweiligen Seitenwand des Stellhebelgehäuses (82) schwenkbar gelagert ist.

16. Bedienungseinheit nach einem der voranstehenden Ansprüche, **dadurch gekennzeichnet, dass** der Inaktivstellung (IS) des Stellhebels (90) ein Anschlagdämpfungselement (154) zugeordnet ist.

## Claims

1. Operating unit for a vehicle, the operating unit having a handlebar (12) for steering the vehicle, the operating unit having a handle (16) disposed on the handlebar (12), comprising a hand-resting surface (18) and an inner annular body (24) that projects above the hand-resting surface (18) in a radial direction in relation to a centre axis (20) of the handle (16), and the operating unit having a lever arrangement which is associated with the handle (16), the lever arrangement comprising an actuating-lever housing (32) which can be fitted to a handlebar (12), adjoining the handle (16), by way of a mounting portion (64), and on which an actuating lever (30) is mounted such that it can be pivoted about an axis (34), and the lever arrangement comprising an adjusting lever (90), the adjusting lever (90) being movable in a pivoting plane (100) by pivoting about a pivot axis (92), from a stable inactive position (IS), in which the adjusting lever (90) is positioned on a side of its pivot axis (92) that is directed away from the actuating lever (30), into a stable active position (AS), in which the adjusting lever (90) is positioned on a side of its pivot axis (92) that is directed towards the actuating lever (30), and vice versa, the pivoting plane (100) running at an angle (α) of less than 30° in relation to the movement plane (50) of the actuating lever (30), **characterized in that** adjusting lever (90), in the active position (AS), lies substantially on a side of a plane (102) which is directed away from the handle (16) and the actuating portion (40) of the actuating lever (30), the plane (102) running perpendicular to the centre axis (20) of the handle (16) and intersecting the inner annular body (24) of the handle (16) and therefore being located outside a manual-action region (104) for actuating the actuating lever (30), this region extending between a hand-resting surface (18) of the handle (16) and a hand-gripping surface (38) of the actuating lever (30).

2. Operating unit according to Claim 1, **characterized in that** the adjusting lever (90) is mounted in a pivotable manner in an adjusting-lever housing (82) disposed on the actuating-lever housing (32), and **in that** the adjusting lever (90), in the active position (AS), has a finger-actuating surface (112) which runs at a distance from the handle (16) and is directed towards the latter and, when this finger-actuating surface is acted on, the adjusting lever (90) executes a pivoting movement leading away from the handle (16) and out of the active position.

3. Operating unit according to Claim 1 or 2, **characterized in that** the adjusting lever (90), in the active position (AS), has its finger-actuating surface (112) located alongside the hand-gripping surface (38) of the actuating lever (30) and offset in the direction of the actuating-lever housing (32).

4. Operating unit according to Claim 3, **characterized in that** the adjusting lever (90), in its active position (AS), has its finger-actuating surface (112) located between the hand-gripping surface (38) of the actuating lever (30) and the actuating-lever housing (32).

5. Operating unit according to any of Claims 1 to 4, **characterized in that** the finger-actuating surface (112) of the adjusting lever (90), in the active position (AS), can be located on that side of a movement plane (50) of the actuating lever (30) on which a hand (70) which is acting on the actuating lever (30) is located.

6. Operating unit according to any of the preceding claims, **characterized in that** the actuating-lever housing (32) has a cover (80), on which the adjusting-lever housing (82) is disposed.

7. Operating unit according to Claim 6, **characterized in that** the adjusting-lever housing (82) is formed integrally on the cover (80).

8. Operating unit according to Claim 6 or 7, **characterized in that** the cover (80) of the actuating-lever housing (82) covers a hydraulic reservoir (74) provided therein.

9. Operating unit according to any of the preceding claims, **characterized in that** the adjusting lever (90) acts on a transmission device (148) which is biased elastically in a retraction direction (150).

10. Operating unit according to Claim 9, **characterized in that** the transmission device (148) acts on the adjusting lever (90) such that the latter passes automatically into the inactive position (IS) after moving out of the active position (AS).

11. Operating unit according to Claim 10, **characterized in that** the adjusting lever (90), in the active position (AS), is in an over-dead-centre position.

12. Operating unit according to Claim 11, **characterized in that**, by means of the adjusting lever (90), an articulation (138) of a pulling element (130) of the transmission device (148) can be moved over an arcuate segment (140) about the pivot axis (92).

13. Operating unit according to Claim 12, **characterized in that** the adjusting lever (90) has two lever side pieces (122, 124) disposed on both sides of an interspace (126), and **in that** the pulling element (130), leading away from the articulation (138), runs within the interspace (126).

14. Operating unit according to Claim 13, **characterized in that** the two lever side pieces (122, 124) are disposed between side walls of the adjusting-lever housing (82).

15. Operating unit according to Claim 14, **characterized in that** each lever side piece (122, 124), on its side which is directed away from the interspace (126), is mounted in a pivotable manner on the respective side wall of the adjusting-lever housing (82).

16. Operating unit according to any of the preceding claims, **characterized in that** a damping element (154) is associated with the inactive position (IS) of the adjusting lever (90).

## Revendications

1. Unité de commande pour un véhicule avec un guidon (12) servant à guider le véhicule, avec une poignée (16) agencée au niveau du guidon (12), comprenant une surface d'appui pour la main (18) ainsi qu'un corps annulaire (24) intérieur dépassant de la surface d'appui pour la main (18) radialement par rapport à un axe médian (20) de la poignée (16), et avec un ensemble levier affecté à la poignée (16), comprenant un boîtier de levier d'actionnement (32) pouvant être monté au niveau du guidon (12) à la suite de la poignée (16) avec une section de retenue (64), au niveau duquel boîtier un levier d'actionnement (30) est logé de manière pivotante autour d'un axe (34), et un levier de réglage (90), qui peut être déplacé par pivotement autour d'un axe de pivotement (92) d'une position inactive stable (IS), dans laquelle le levier de réglage (90) se trouve d'un côté de son axe de pivotement (92) qui est opposé au levier d'actionnement (30), à une position active stable (AS), dans laquelle le levier de réglage (90) se trouve d'un côté de son axe de pivotement (92) qui est tourné vers le levier d'actionnement (30) et inversement dans un plan de pivotement (100) qui s'étend à un angle (α) inférieur à 30° par rapport au plan de déplacement (50) du levier d'actionnement (30),
**caractérisée en ce que** le levier de réglage (90) dans la position active (AS) se trouve essentiellement d'un côté d'un plan (102) opposé à la poignée (16) et à la section d'actionnement (40) du levier d'actionnement (30), qui s'étend de manière perpendiculaire à l'axe médian (20) de la poignée (16) et coupe le corps annulaire (24) intérieur de la poignée (16) et se trouve ainsi en dehors d'une zone d'action (104) manuelle s'étendant entre une surface d'appui pour la main (18) de la poignée (16) et une surface de saisie (38) du levier d'actionnement (30) permettant l'actionnement du levier d'actionnement (30).

2. Unité de commande selon la revendication 1, **caractérisée en ce que** le levier de réglage (90) est logé de manière pivotante dans un boîtier de levier de réglage (82) agencé au niveau du boîtier de levier d'actionnement (32) et **en ce que** le levier de réglage (90) présente dans la position active (AS) une surface d'actionnement au doigt (112) s'étendant à distance de la poignée (16) et tournée vers celle-ci, lors de la sollicitation de laquelle surface le levier de réglage (90) réalise un mouvement de pivotement s'éloignant de la poignée (16) et provoquant la sortie de la position active.

3. Unité de commande selon la revendication 1 ou 2, **caractérisée en ce que** le levier de réglage (90) dans la position active (AS) se trouve avec sa surface d'actionnement au doigt (112) à côté de la surface de saisie (38) du levier d'actionnement (30) de manière décalée en direction du boîtier de levier d'actionnement (32).

4. Unité de commande selon la revendication 3, **caractérisée en ce que** le levier de réglage (90) dans sa position active (AS) se trouve avec sa surface d'actionnement au doigt (112) entre la surface de saisie (38) du levier d'actionnement (30) et le boîtier de levier d'actionnement (32).

5. Unité de commande selon l'une quelconque des revendications 1 à 4, **caractérisée en ce que** la surface d'actionnement au doigt (112) du levier de réglage (90) dans la position active (AS) se trouve du côté d'un plan de déplacement (50) du levier d'actionnement (30), sur lequel peut être posée une main (70) saisissant le levier d'actionnement (30).

6. Unité de commande selon l'une quelconque des revendications précédentes, **caractérisée en ce que** le boîtier de levier d'actionnement (32) présente un couvercle (80) au niveau duquel est agencé le boîtier de levier de réglage (82).

7. Unité de commande selon la revendication 6, **caractérisée en ce que** le boîtier de levier de réglage (82) est formé d'un seul tenant sur le couvercle (80).

8. Unité de commande selon la revendication 6 ou 7, **caractérisée en ce que** le couvercle (80) du boîtier de levier d'actionnement (32) couvre un réservoir de compensation (74) hydraulique prévu dans celui-ci.

9. Unité de commande selon l'une quelconque des revendications précédentes, **caractérisée en ce que** le levier de réglage (90) agit sur un dispositif de transmission (148) précontraint de manière élastique dans un sens de rappel (150).

10. Unité de commande selon la revendication 9, **caractérisée en ce que** le dispositif de transmission (148) agit sur le levier de réglage (90) de telle sorte que celui-ci passe automatiquement à la position inactive (IS) après la sortie de la position active (AS).

11. Unité de commande selon la revendication 10, **caractérisée en ce que** le levier de réglage (90) dans la position active (AS) est dans une position au-delà du point mort.

12. Unité de commande selon la revendication 11, **caractérisée en ce qu'**une articulation (138) d'un élément de traction (130) du dispositif de transmission (148) peut être déplacée sur un segment arqué (140) autour de l'axe de pivotement (92) avec le levier de réglage (90).

13. Unité de commande selon la revendication 12, **caractérisée en ce que** le levier de réglage (90) présente deux joues de levier (122, 124) agencées des deux côtés d'un interstice (126) et **en ce que** l'élément de traction (130) éloignant de l'articulation (138) s'étend dans l'interstice (126).

14. Unité de commande selon la revendication 13, **caractérisée en ce que** les deux joues de levier (122, 124) sont agencées entre des parois latérales du boîtier de levier de réglage (82).

15. Unité de commande selon la revendication 14, **caractérisée en ce que** chaque joue de levier (122, 124) est logée de manière pivotante de son côté opposé à l'interstice (126) au niveau de la paroi latérale respective du boîtier de levier de réglage (82).

16. Unité de commande selon l'une quelconque des revendications précédentes, **caractérisée en ce qu'**un élément d'amortissement de butée (154) est affecté à la position inactive (IS) du levier de réglage (90).
